# EUROPEAN PATENT SPECIFICATION

(11) **EP 4 007 132 B1**
(45) Date of publication and mention of the grant of the patent: **26.07.2023**
(21) Application number: 20859584.3
(22) Date of filing: 28.08.2020
(51) Int. Cl.: H02K 5/20, H02K 1/20, H02K 7/18, H02K 9/04

(54) **DEVICE FOR REDUCING CIRCUMFERENTIAL TEMPERATURE DIFFERENCE BETWEEN COIL AND CORE OF LARGE-DIAMETER MOTOR**
VORRICHTUNG ZUM VERMINDERN DER UMFANGSTEMPERATURDIFFERENZ ZWISCHEN SPULE UND KERN EINES MOTORS MIT GROSSEM DURCHMESSER
DISPOSITIF PERMETTANT DE RÉDUIRE LA DIFFÉRENCE DE TEMPÉRATURE CIRCONFÉRENTIELLE ENTRE LA BOBINE ET LE NOYAU D'UN MOTEUR DE GRAND DIAMÈTRE

(30) Priority: 30.08.2019 CN 201910813315
(43) Date of publication of application: 01.06.2022
(73) Proprietor: Dongfang Electric Machinery Co., Ltd., Deyang, Sichuan 61800 (CN)
(72) Inventor: WANG, Chao, Sichuan 618000 (CN); ZHOU, Guanghou, Sichuan 618000 (CN); JIANG, Xiaoping, Sichuan 618000 (CN); LIAO, Yigang, Sichuan 618000 (CN); WANG, Fengjun, Sichuan 618000 (CN); YANG, Yan, Sichuan 618000 (CN)
(74) Representative: Patrade A/S
(86) International application number: PCT/CN2020/112043
(87) International publication number: WO 2021/037192

(56) References cited:
- EP-A1- 0 639 883
- EP-A1- 2 672 613
- EP-A1- 2 975 742
- CN-A- 1 109 225
- CN-A- 102 332 780
- CN-A- 102 332 780
- CN-A- 109 474 113
- CN-A- 110 429 746
- CN-A- 110 429 747
- CN-U- 204 118 962
- DE-A1-102014 216 692
- JP-A- H01 138 947

## Description

### TECHNICAL FIELD

The invention relates to the technical field of a wind turbine generator, in particular to a structure for reducing circumferential temperature difference of a generator/motor coil and core.

### BACKGROUND

A large low-speed rotating generator, especially the direct-driven wind turbine generator, usually provides low rotation speed of about 10 r/min and the air pressure of few Pa and cannot drive sufficient air to flow inside the generator so as to carry away the heat generated during the operation of the generator. This problem is solved commonly by configuring some fans on a generator base so as to drive the air inside to flow. However, the fans cannot be uniformly arranged circumferentially on the generator base due to the other arrangement such as a brake, a locking device, an outlet box, a manhole and the like. An inlet and an outlet of the fans can only be arranged at the upper part of the generator base, however, this arrangement would cause uneven temperature distribution on the stator coil and core, and the circumferential temperature difference can reach 30K-40K when the generator bears high load according to the experiments and calculations.

In recent years, the fans may be uniformly arranged circumferentially on the generator base. However, due to the large diameter of the generator/motor causing the large circumferential space which needs high airflow speed, the circumferential temperature distribution on the stator coil and core are still uneven.

Nowadays, the limitation to the generator/motor temperature focus on its hottest spot temperature, however, the uneven circumferential temperature not only seriously affect the maximum output of the generator/motor, but the measured temperature may also not truly reflect the actual maximum temperature of the generator/motor stator coil and iron core, which brings potential hazards to the generator/motor in operation.

Chinese patent publication CN109787381A published on 21 May 2019 disclosed a cooling device for motor, characterized in that the cooling device for motor comprises:
a plurality of stator ventilation holes formed in a stator core along an axial direction of the stator core;
a first mounting element and a second mounting element each shaped corresponding to the stator core, respectively coupled to both sides of the stator core in the axial direction, wherein a plurality of first ventilation holes and a plurality of second ventilation holes are formed in respective mounting elements, in the axial direction;
a bracket comprising a main body, as well as a first support part and second support part individually protruding radially outward from both sides of the main body, wherein the main body is configured with a plurality of bracket ventilation holes, and the first mounting element and second mounting element are respectively supported on the first support part and the second support part, wherein the first ventilation holes and second ventilation holes respectively are corresponded to the corresponding stator ventilation holes in the plurality of stator ventilation holes to form a first ventilation channel and second ventilation channel which are independent from each other, whereby the air flows into/through the first ventilation channel and second ventilation channel respectively and oppositely from sides of the stator core in the axial direction, and flows out through the plurality of bracket ventilation holes.

Chinese publication number CN202856493U published on 03 April 2013 disclosed an air guide plate between the rotor poles of a hydraulic generator, comprising an air guide plate, a screw, a fastener, a pressing plate, a backing plate and a fixing block, characterized in that the fixing block is pre-assembled in a yoke, then the screw is screwed into the fixing block which is fastened by the backing plate and fastener; finally, the backing plate, air guide plate and pressing plate are fastened by the upper portion of the screw and the fastener.

Chinese patent publication CN102332780A published 25 January 2012 discloses an air cooled wind turbine generator.

The prior art above cannot effectively improve the circumferential uniformity of the airflow and cannot achieve the circumferential uniform distribution of the airflow speed due to poor structural design, so that the circumferential temperature difference of the generator/motor cannot be reduced effectively.

### SUMMARY OF INVENTION

In order to overcome the above-mentioned defects of the prior art, the present invention provides a structure for reducing circumferential temperature difference of generator/motor coil and core. The present invention may not only improve the circumferential uniformity of airflow, but also may achieve the circumferential uniform distribution of the airflow speed by adjusting the area of the air inlet hole for different air inlet holes through adjusting an air volume adjustment plate according to actual needs; the structure is simple, adjustable and convenient to be implemented, and it may bring out a benefit, which reduces the circumferential temperature difference of the generator/motor to 10-20 K.

The present invention is achieved by a structure for reducing circumferential temperature difference of generator/motor coil and core according to claim 1.

The silicon steel sheet is 0.5 mm or 0.35 mm in thickness.

The plurality of air inlet holes and air outlet holes are arranged alternately on the first circumferential ring plate at interval.

A large chamber is formed by the rotor base, the first circumferential ring plate and the first plate, and communicated with the intake air duct and the air inlet chamber.

The inclined baffle is installed at the outlet of the intake air duct, wherein the angle between the inclined baffle and the first plate is 30 degrees - 60 degrees.

The present invention has the advantageous effect in the following aspects:
1. According to the present invention, the plurality of stator core segments are stacked from silicon steel sheets which are provided with a slot for placing stator coils, and a stator channel steel is arranged between any both adjacent segments of the stator core segments, whereby a stator ventilation channel is formed by the adjacent stator core segments and the stator channel steel, for the flow of a medium for cooling purpose. The plurality of stator core segments are penetrated by the tightening screw whose one end is fixedly connected to the first core pressing plate and the other end is fixedly connected to the second core pressing plate. An gap is provided between the rotor magnetic steels and the stator core segments, a first circumferential ring plate, whose one end is fixedly connected to the first core pressing plate and the other end is fixedly connected to the second core pressing plate, is fixedly connected to the stator core segments, and at least three axial plates are fixedly connected to the inner wall of the first circumferential ring plate, whereby an air inlet chamber or an air outlet chamber is formed by the first circumferential ring plate, the stator core segments and the two adjacent axial plates, and the air inlet chamber and air outlet chamber are arranged alternately. A plurality of air inlet holes and air outlet holes are configured on the first circumferential ring plate, wherein each hole is in communication with the corresponding air inlet chamber and each hole is in communication with the corresponding air outlet chamber. A first plate and second plate are fixedly connected to the outer wall of the first circumferential ring plate, and a second circumferential ring plate is fixedly configured/connected between/to the first plate and second plate. An inclined baffle is connected to the first plate via a plurality of connecting plates. An air outlet duct is connected to the second circumferential ring plate and communicated with the air outlet chamber, while an intake air duct is connected to the first plate and communicated with the air inlet chamber; wherein an air volume adjustment plate for adjusting the circumferential airflow is installed at each of the air inlet holes, wherein the air volume adjustment plate is hinged to the first circumferential ring plate. As the generator/motor is running, on the one hand, the high-speed airflow from a fan impacts the inclined baffle, resulting in the circumferential and axial diffusion of the airflow, so that the circumferential uniformity of airflow may be improved; on the other hand, the circumferential uniform distribution of the airflow speed may be achieved by adjusting the area of the air inlet hole for different air inlet holes through adjusting an air volume adjustment plate according to actual needs; the structure is simple, adjustable and convenient to be implemented, and it may bring out a benefit, which reduces the circumferential temperature difference of the generator/motor to 10-20 K.
2. According to the present invention, the silicon steel sheet is 0.5 mm or 0.35 mm in thickness, leading to easy selection and process.
3. According to the present invention, the plurality of air inlet holes and air outlet holes are arranged alternately on the first circumferential ring plate at interval. Such arrangement may further improve the circumferential uniformity of airflow and heat dissipation effect.
4. According to the present invention, a large chamber is formed by the rotor base, the first circumferential ring plate and the first plate, and communicated with the intake air duct and the air inlet chamber. Such arrangement may improve the ventilation and heat dissipation effect.
5. According to the present invention, the inclined baffle is installed at the outlet of the intake air duct, wherein the angle between the inclined baffle and the first plate is 30 degrees - 60 degrees. If such angle is too small, the inclined baffle will strongly block the airflow from the fan, and the total air volume to the generator will be reduced, while if such angle is too large, the airflow diffusion will impact the circumferential uniformity of the airflow in the generator/motor. Therefore, it is necessary to adopt a certain angle to reach a good balance between the said scenarios.
6. According to the present invention, each of the air inlet holes is blocked partly by the air volume adjustment plate, and the unblocked part of the hole is an air flowing area, which is minimized when the air inlet hole is close to the axis of the intake air duct, and is maximized when the circumferentially symmetrical air inlet hole is far away from the axis of the intake air duct. With this specific arrangement, it is possible to maximize the uniformity of heat dissipation and improve the heat dissipation effect.

### BRIEF DESCRIPTION OF DRAWINGS

The present invention will be described in further detail with reference to the accompanying drawings and detailed description, in which:
Figure 1 is a schematic diagram of a structure according to the present invention.
Fig. 2 is a schematic view showing the structure of a segment of the stator core according to the present invention;
Fig. 3 is a schematic view showing the airflow in the circumferential airflow zone of the present invention;
Fig. 4 is a schematic view showing an arrangement of circumferential air inlet holes and air outlet holes according to the present invention;
Fig. 5 is a schematic view showing a structure according to the present invention when applying to a generator/motor;

List of reference characters:
1. rotor base, 2. rotor core, 3. rotor magnetic steel, 4. stator core segment, 5. first core pressing plate, 6. second core pressing plate, 7. tightening screw, 8. silicon steel sheet, 9. stator coil, 10. slot, 11. stator channel steel, 12. stator ventilation passage, 13. gap, 14. first circumferential ring plate, 15. axial plate, 16. air inlet chamber, 17. air outlet chamber, 18. air inlet hole, 19. air outlet hole, 20. first plate, 21. second plate, 22. second circumferential ring plate, 23. connecting plate, 24. inclined baffle, 25.air outlet duct, 26. intake air duct, 27. air volume adjustment plate, 28. large chamber, 29. air flowing area.

### DETAILED DESCRIPTION OF EMBODIMENTS

### Embodiment 1

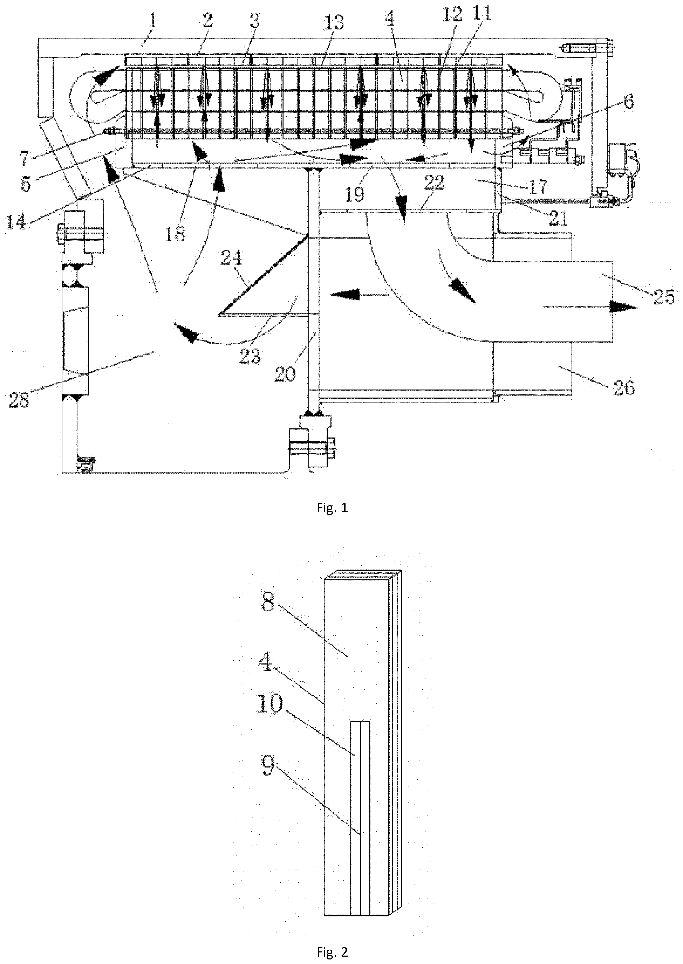

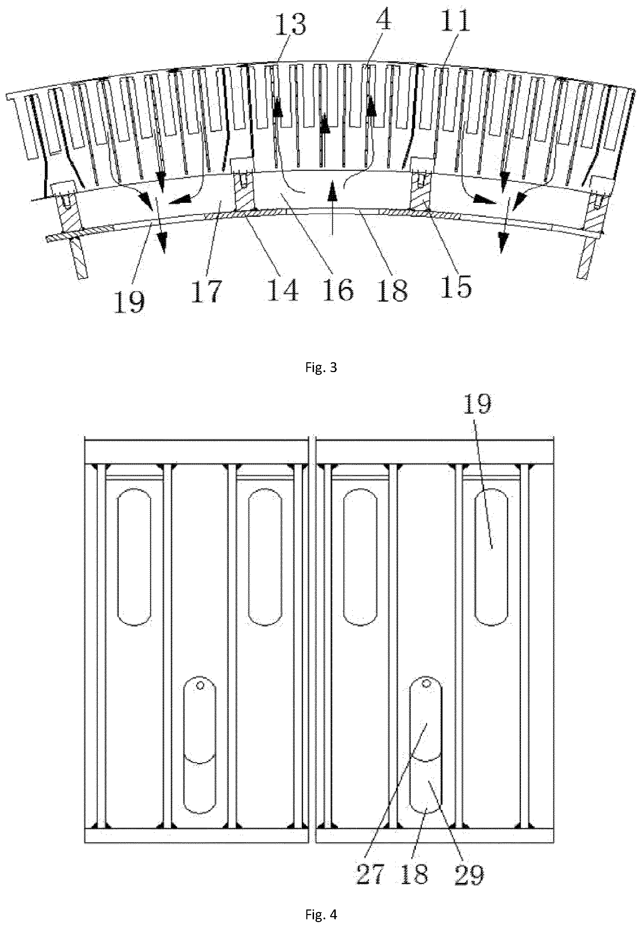

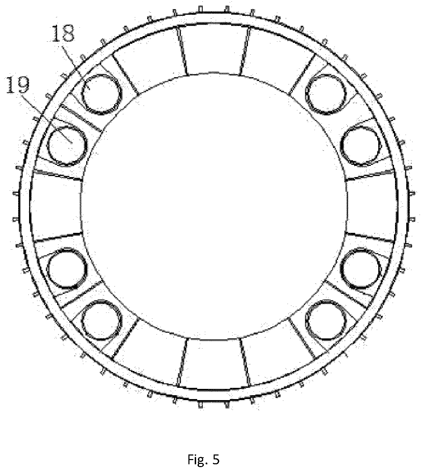

Referring to FIGs. 1-5, a structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein the plurality of stator core segments 4 are stacked from silicon steel sheets 8 which are provided with a slot 10 for placing stator coils 9, and a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16, wherein an air volume adjustment plate 27 for adjusting the circumferential airflow is installed at each of the air inlet holes 18, and the air volume adjustment plate 27 is hinged to the first circumferential ring plate 14.

This example is a basic embodiment, wherein the plurality of stator core segments are stacked from silicon steel sheets which are provided with a slot for placing stator coils, and a stator channel steel is arranged between any both adjacent segments of the stator core segments, whereby a stator ventilation channel is formed by the adjacent stator core segments and the stator channel steel, for the flow of a medium for cooling purpose. The plurality of stator core segments are penetrated by the tightening screw whose one end is fixedly connected to the first core pressing plate and the other end is fixedly connected to the second core pressing plate. An gap is provided between the rotor magnetic steels and the stator core segments, a first circumferential ring plate, whose one end is fixedly connected to the first core pressing plate and the other end is fixedly connected to the second core pressing plate, is fixedly connected to the stator core segments, and at least three axial plates are fixedly connected to the inner wall of the first circumferential ring plate, whereby an air inlet chamber or an air outlet chamber is formed by the first circumferential ring plate, the stator core segments and the two adjacent axial plates, and the air inlet chamber and air outlet chamber are arranged alternately. A plurality of air inlet holes and air outlet holes are configured on the first circumferential ring plate, wherein each hole is in communication with the corresponding air inlet chamber and each hole is in communication with the corresponding air outlet chamber. A first plate and second plate are fixedly connected to the outer wall of the first circumferential ring plate, and a second circumferential ring plate is fixedly configured/connected between/to the first plate and second plate. An inclined baffle is connected to the first plate via a plurality of connecting plates. An air outlet duct is connected to the second circumferential ring plate and communicated with the air outlet chamber, while an intake air duct is connected to the first plate and communicated with the air inlet chamber, wherein an air volume adjustment plate for adjusting the circumferential airflow is installed at each of the air inlet holes, wherein the air volume adjustment plate is hinged to the first circumferential ring plate. As the generator/motor is running, on the one hand, the high-speed airflow from a fan impacts the inclined baffle, resulting in the circumferential and axial diffusion of the airflow, so that the circumferential uniformity of airflow may be improved; on the other hand, the circumferential uniform distribution of the airflow speed may be achieved by adjusting the area of the air inlet hole for different air inlet holes through adjusting an air volume adjustment plate according to actual needs; the structure is simple, adjustable and convenient to be implemented, it may bring out a benefit, which reduces the circumferential temperature difference of the generator/motor to 10-20 K.

### Embodiment 2

Referring to FIGs. 1-5, a structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein the plurality of stator core segments 4 are stacked from silicon steel sheets 8 which are provided with a slot 10 for placing stator coils 9, and a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16, wherein an air volume adjustment plate 27 for adjusting the circumferential airflow is installed at each of the air inlet holes 18, wherein the air volume adjustment plate 27 is hinged to the first circumferential ring plate 14.

The silicon steel sheet 8 is 0.5mm in thickness.

The plurality of air inlet holes 18 and air outlet holes 19 are arranged alternately on the first circumferential ring plate 14 at interval.

A large chamber 28 is formed by the rotor base 1, the first circumferential ring plate 14 and the first plate 20, and communicated with the intake air duct 26 and the air inlet chamber 16.

This example is a preferred embodiment, the plurality of air inlet holes and air outlet holes are arranged alternately on the first circumferential ring plate at interval. Such arrangement may further improve the circumferential uniformity of airflow and heat dissipation effect.

A large chamber is formed by the rotor base, the first circumferential ring plate and the first plate, and communicated with the intake air duct and the air inlet chamber. Such arrangement may improve the ventilation and heat dissipation effect.

### Embodiment 3

Referring to FIGs. 1-5, a structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein the plurality of stator core segments 4 are stacked from silicon steel sheets 8 which are provided with a slot 10 for placing stator coils 9, and a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16, wherein an air volume adjustment plate 27 for adjusting the circumferential airflow is installed at each of the air inlet holes 18, wherein the air volume adjustment plate 27 is hinged to the first circumferential ring plate 14.

The silicon steel sheet 8 is 0.35mm in thickness.

The plurality of air inlet holes 18 and air outlet holes 19 are arranged alternately on the first circumferential ring plate 14 at interval.

A large chamber 28 is formed by the rotor base 1, the first circumferential ring plate 14 and the first plate 20, and communicated with the intake air duct 26 and the air inlet chamber 16.

The inclined baffle 24 is installed at the outlet of the intake air duct 26, and the angle between the inclined baffle 24 and the first plate 20 is 30 degrees.

### Embodiment 4

Referring to FIGs. 1-5, a structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein the plurality of stator core segments 4 are stacked from silicon steel sheets 8 which are provided with a slot 10 for placing stator coils 9, and a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16, wherein an air volume adjustment plate 27 for adjusting the circumferential airflow is installed at each of the air inlet holes 18, wherein the air volume adjustment plate 27 is hinged to the first circumferential ring plate 14.

The silicon steel sheet 8 is 0.35mm in thickness.

The plurality of air inlet holes 18 and air outlet holes 19 are arranged alternately on the first circumferential ring plate 14 at interval.

A large chamber 28 is formed by the rotor base 1, the first circumferential ring plate 14 and the first plate 20, and communicated with the intake air duct 26 and the air inlet chamber 16.

The inclined baffle 24 is installed at the outlet of the intake air duct 26, and the angle between the inclined baffle 24 and the first plate 20 is 45 degrees.

### Embodiment 5

Referring to FIGs. 1-5, a structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein the plurality of stator core segments 4 are stacked from silicon steel sheets 8 which are provided with a slot 10 for placing stator coils 9, and a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16, wherein an air volume adjustment plate 27 for adjusting the circumferential airflow is installed at each of the air inlet holes 18, wherein the air volume adjustment plate 27 is hinged to the first circumferential ring plate 14.

The silicon steel sheet 8 is 0.35mm in thickness.

The plurality of air inlet holes 18 and air outlet holes 19 are arranged alternately on the first circumferential ring plate 14 at interval.

A large chamber 28 is formed by the rotor base 1, the first circumferential ring plate 14 and the first plate 20, and communicated with the intake air duct 26 and the air inlet chamber 16.

The inclined baffle 24 is installed at the outlet of the intake air duct 26, and the angle between the inclined baffle 24 and the first plate 20 is 60 degrees.

### Embodiment 6

Referring to FIGs. 1-5, a structure for reducing circumferential temperature difference of generator/motor coil and core includes a rotor base 1, a rotor core 2 mounted on the rotor base 1, a plurality of rotor magnetic steels 3 arranged in the axial direction of the rotor core 2, a plurality of stator core segments 4, a first core pressing plate 5, a second core pressing plate 6 and a tightening screw 7, wherein the plurality of stator core segments 4 are stacked from silicon steel sheets 8 which are provided with a slot 10 for placing stator coils 9, and a stator channel steel 11 is arranged between any both adjacent segments of the stator core segments 4, whereby a stator ventilation channel 12 is formed by the adjacent stator core segments 4 and the stator channel steel 11, for the flow of a medium for cooling purpose. The plurality of stator core segments 4 are penetrated by the tightening screw 7 whose one end is fixedly connected to the first core pressing plate 5 and the other end is fixedly connected to the second core pressing plate 6. An gap 13 is provided between the rotor magnetic steels 3 and the stator core segments 4, a first circumferential ring plate 14, whose one end is fixedly connected to the first core pressing plate 5 and the other end is fixedly connected to the second core pressing plate 6, is fixedly connected to the stator core segments 4, and at least three axial plates 15 are fixedly connected to the inner wall of the first circumferential ring plate 14, whereby an air inlet chamber 16 or an air outlet chamber 17 is formed by the first circumferential ring plate 14, the stator core segments 4 and the two adjacent axial plates 15, and the air inlet chamber 16 and air outlet chamber 17 are arranged alternately. A plurality of air inlet holes 18 and air outlet holes 19 are configured on the first circumferential ring plate 14, wherein each hole 18 is in communication with the corresponding air inlet chamber 16 and each hole 19 is in communication with the corresponding air outlet chamber 17. A first plate 20 and second plate 21 are fixedly connected to the outer wall of the first circumferential ring plate 14, and a second circumferential ring plate 22 is fixedly configured/connected between/to the first plate 20 and second plate 21. An inclined baffle 24 is connected to the first plate 20 via a plurality of connecting plates 23. An air outlet duct 25 is connected to the second circumferential ring plate 22 and communicated with the air outlet chamber 17, while an intake air duct 26 is connected to the first plate 20 and communicated with the air inlet chamber 16, wherein an air volume adjustment plate 27 for adjusting the circumferential airflow is installed at each of the air inlet holes 18, wherein the air volume adjustment plate 27 is hinged to the first circumferential ring plate 14.

The silicon steel sheet 8 is 0.35mm in thickness.

The plurality of air inlet holes 18 and air outlet holes 19 are arranged alternately on the first circumferential ring plate 14 at interval.

A large chamber 28 is formed by the rotor base 1, the first circumferential ring plate 14 and the first plate 20, and communicated with the intake air duct 26 and the air inlet chamber 16.

The inclined baffle 24 is installed at the outlet of the intake air duct 26, and the angle between the inclined baffle 24 and the first plate 20 is 60 degrees.

Each of the air inlet holes 18 is blocked partly by the air volume adjustment plate 27, and the unblocked part of the hole is an air flowing area 29, which is minimized when the air inlet hole is close to the axis of the intake air duct, and is maximized when the circumferentially symmetrical air inlet hole is far away from the axis of the intake air duct.

This example is the best embodiment, wherein the plurality of stator core segments are stacked from silicon steel sheets which are provided with a slot for placing stator coils, and a stator channel steel is arranged between any both adjacent segments of the stator core segments, whereby a stator ventilation channel is formed by the adjacent stator core segments and the stator channel steel, for the flow of a medium for cooling purpose. The plurality of stator core segments are penetrated by the tightening screw whose one end is fixedly connected to the first core pressing plate and the other end is fixedly connected to the second core pressing plate. An gap is provided between the rotor magnetic steels and the stator core segments, a first circumferential ring plate, whose one end is fixedly connected to the first core pressing plate and the other end is fixedly connected to the second core pressing plate, is fixedly connected to the stator core segments, and at least three axial plates are fixedly connected to the inner wall of the first circumferential ring plate, whereby an air inlet chamber or an air outlet chamber is formed by the first circumferential ring plate, the stator core segments and the two adjacent axial plates, and the air inlet chamber and air outlet chamber are arranged alternately. A plurality of air inlet holes and air outlet holes are configured on the first circumferential ring plate, wherein each hole is in communication with the corresponding air inlet chamber and each hole is in communication with the corresponding air outlet chamber. A first plate and second plate are fixedly connected to the outer wall of the first circumferential ring plate, and a second circumferential ring plate is fixedly configured/connected between/to the first plate and second plate. An inclined baffle is connected to the first plate via a plurality of connecting plates. An air outlet duct is connected to the second circumferential ring plate and communicated with the air outlet chamber, while an intake air duct is connected to the first plate and communicated with the air inlet chamber, wherein an air volume adjustment plate for adjusting the circumferential airflow is installed at each of the air inlet holes, wherein the air volume adjustment plate is hinged to the first circumferential ring plate. As the generator/motor is running, on the one hand, the high-speed airflow from a fan impacts the inclined baffle, resulting in the circumferential and axial diffusion of the airflow, so that the circumferential uniformity of airflow may be improved; on the other hand, the circumferential uniform distribution of the airflow speed may be achieved by adjusting the area of the air inlet hole for different air inlet holes through adjusting an air volume adjustment plate according to actual needs; the structure is simple, adjustable and convenient to be implemented, it may bring out a benefit, which reduces the circumferential temperature difference of the generator/motor to 10-20 K.

Each of the air inlet holes is blocked partly by the air volume adjustment plate, and the unblocked part of the hole is an air flowing area, which is minimized when the air inlet hole is close to the axis of the intake air duct, and is maximized when the circumferentially symmetrical air inlet hole is far away from the axis of the intake air duct. With this specific arrangement, it is possible to maximize the uniformity of heat dissipation and improve the heat dissipation effect.

## Claims

1. A structure for reducing circumferential temperature difference of generator/motor coil and core, comprising a rotor base (1), a rotor core (2) mounted on the rotor base (1), a plurality of rotor magnetic steels (3) arranged in the axial direction of the rotor core (2), wherein
the structure further comprises a plurality of stator core segments (4), a first core pressing plate (5), a second core pressing plate (6) and a tightening screw (7), wherein the plurality of stator core segments (4) are stacked from silicon steel sheets (8) which are provided with a slot (10) for placing stator coils (9), and a stator channel steel (11) is arranged between any both adjacent segments of the stator core segments (4), whereby a stator ventilation channel (12) is formed by the adjacent stator core segments (4) and the stator channel steel (11), for the flow of a medium for cooling purpose, wherein the plurality of stator core segments (4) are penetrated by the tightening screw (7) whose one end is fixedly connected to the first core pressing plate (5) and the other end is fixedly connected to the second core pressing plate (6); a gap (13) is provided between the rotor magnetic steel (3) and the stator core segments (4), a first circumferential ring plate (14), whose one end is fixedly connected to the first core pressing plate (5) and the other end is fixedly connected to the second core pressing plate (6), is fixedly connected to the stator core segments (4), and at least three axial plates (15) are fixedly connected to the inner wall of the first circumferential ring plate (14) facing the stator core segments (4), whereby air inlet chambers (16) and air outlet chambers (17) are formed by the first circumferential ring plate (14), the stator core segments (4) and the adjacent axial plates (15), and the air inlet chambers (16) and air outlet chambers (17) are arranged alternately; a plurality of air inlet holes (18) and air outlet holes (19) are configured on the first circumferential ring plate (14), wherein each air inlet hole (18) is in communication with a corresponding air inlet chamber (16) and each air outlet hole (19) is in communication with a corresponding air outlet chamber (17); a
first plate (20) and second plate (21) are fixedly connected to the outer wall of the first circumferential ring plate (14), and a second circumferential ring plate (22) is fixedly connected to the first plate (20) and second plate (21); an inclined baffle (24) is connected to the first plate (20) via a plurality of connecting plates (23);
an air outlet duct (25) is connected to the second circumferential ring plate (22) and communicated with the air outlet chambers (17), while an intake air duct (26) is connected to the first plate (20) and communicated with the air inlet chambers (16);
wherein an air volume adjustment plate (27) for adjusting the circumferential airflow is installed at each of the air inlet holes (18), wherein the air volume adjustment plate (27) is hinged to the first circumferential ring plate (14); each of the air inlet holes (18) is blocked partly by the air volume adjustment plate (27), and the unblocked part of each air inlet hole (18) is an air flowing area (29) which is minimized when the air inlet hole (18) is closed from the side of the intake air duct (26) when seen in the axis direction of the intake air duct (26), and is maximized when the circumferentially symmetrical air inlet hole (18) is opened towards the side of the intake air duct (26) when seen in the axis direction of the intake air duct (26).

2. The structure of claim 1, **characterized in that** the silicon steel sheet (8) is 0.5 mm or 0.35 mm in thickness.

3. The structure according to claim 1, **characterized in that** the plurality of air inlet holes (18) and air outlet holes (19) are arranged alternately on the first circumferential ring plate (14) at interval.

4. The structure according to claim 1, **characterized in that** a large chamber (28) is formed by the rotor base (1), the first circumferential ring plate (14) and the first plate (20), and communicated with the intake air duct (26) and the air inlet chamber (16).

5. The structure according to claim 1, **characterized in that** the inclined baffle (24) is installed at the outlet of the intake air duct (26), and the angle between the inclined baffle (24) and the first plate (20) is 30 degrees - 60 degrees.

## Patentansprüche

1. Struktur zum Vermindern der Umfangstemperaturdifferenz von Generator-/Motorspule und -kern, umfassend einer Rotorbasis (1), einen auf der Rotorbasis (1) montierten Rotorkern (2), eine Vielzahl von Rotormagnetstählen (3), die in der axialen Richtung des Rotorkerns (2) angeordnet sind, wobei die Struktur ferner eine Vielzahl von Statorkernsegmenten (4), eine erste Kernpressplatte (5), eine zweite Kernpressplatte (6) und eine Spannschraube (7) umfasst, wobei die Vielzahl von Statorkernsegmenten (4) aus Siliziumstahlblechen (8) gestapelt ist, welche mit einem Schlitz (10) zum Platzieren von Statorspulen (9) bereitgestellt sind, und ein Statorkanalstahl (11) zwischen beliebigen beiden benachbarten Segmenten der Statorkernsegmente (4) angeordnet ist, wobei ein Statorlüftungskanal (12) durch die benachbarten Statorkernsegmente (4) und den Statorkanalstahl (11) für das Strömen eines Mediums zu Kühlungszwecken ausgebildet ist, wobei die Vielzahl von Statorkernsegmenten (4) von der Spannschraube (7) durchdrungen wird, deren eines Ende fest mit der ersten Kernpressplatte (5) verbunden ist und deren anderes Ende fest mit der zweiten Kernpressplatte (6) verbunden ist; wobei ein Spalt (13) zwischen dem Rotormagnetstahl (3) und den Statorkernsegmenten (4) bereitgestellt ist, eine erste Umfangsringplatte (14), deren eines Ende fest mit der ersten Kernpressplatte (5) verbunden ist und deren anderes Ende fest mit der zweiten Kernpressplatte (6) verbunden ist, fest mit den Statorkernsegmenten (4) verbunden ist, und wobei mindestens drei Axialplatten (15) fest mit der Innenwand der ersten Umfangsringplatte (14) verbunden sind, die den Statorkernsegmenten (4) zugewandt ist, wobei Lufteinlasskammern (16) und Luftauslasskammern (17) durch die erste Umfangsringplatte (14), die Statorkernsegmente (4) und die benachbarten Axialplatten (15) ausgebildet sind und die Lufteinlasskammern (16) und Luftauslasskammern (17) abwechselnd angeordnet sind; eine Vielzahl von Lufteinlasslöchern (18) und Luftauslasslöchern (19) an der ersten Umfangsringplatte (14) konfiguriert sind, wobei jedes Lufteinlassloch (18) mit einer entsprechenden Lufteinlasskammer (16) in Kommunikation steht und jedes Luftauslassloch (19) mit einer entsprechenden Luftauslasskammer (17) in Kommunikation steht; wobei eine erste Platte (20) und eine zweite Platte (21) fest mit der Außenwand der ersten Umfangsringplatte (14) verbunden sind und eine zweite Umfangsringplatte (22) fest mit der ersten Platte (20) und der zweiten Platte (21) verbunden ist; wobei eine geneigte Prallwand (24) über eine Vielzahl von Verbindungsplatten (23) mit der ersten Platte (20) verbunden ist; wobei eine Luftaustrittleitung (25) mit der zweiten Umfangsringplatte (22) verbunden ist und mit den Luftauslasskammern (17) kommuniziert wird, während eine Ansaugluftleitung (26) mit der ersten Platte (20) verbunden ist und mit den Lufteinlasskammern (16) kommuniziert wird;
wobei eine Luftvolumen-Einstellplatte (27) zum Einstellen des Umfangsluftstroms an jedem der Lufteinlasslöcher (18) installiert ist, wobei die Luftvolumen-Einstellplatte (27) an der ersten Umfangsringplatte (14) aufgehängt ist; jedes der Lufteinlasslöcher (18) teilweise durch die Luftvolumen-Einstellplatte (27) blockiert ist und der nicht blockierte Teil jedes Lufteinlasslochs (18) ein Luftströmungsbereich (29) ist, welcher minimiert ist, wenn das Lufteinlassloch (18) bei Ansicht in Achsrichtung der Ansaugluftleitung (26) von der Seite der Ansaugluftleitung (26) her verschlossen ist, und maximiert ist, wenn das in Umfangsrichtung symmetrische Lufteinlassloch (18) bei Ansicht in Achsrichtung der Ansaugluftleitung (26) zur Seite der Ansaugluftleitung (26) hin geöffnet ist.

2. Struktur nach Anspruch 1, **dadurch gekennzeichnet, dass** das Siliziumstahlblech (8) 0,5 mm oder 0,35 mm dick ist.

3. Struktur nach Anspruch 1, **dadurch gekennzeichnet, dass** die Vielzahl von Lufteinlasslöchern (18) und Luftauslasslöchern (19) abwechselnd in Abständen auf der ersten Umfangsringplatte (14) angeordnet sind.

4. Struktur nach Anspruch 1, **dadurch gekennzeichnet, dass** eine große Kammer (28) durch die Rotorbasis (1), die erste Umfangsringplatte (14) und die erste Platte (20) ausgebildet ist und mit der Ansaugluftleitung (26) und der Lufteinlasskammer (16) kommuniziert wird.

5. Struktur nach Anspruch 1, **dadurch gekennzeichnet, dass** das geneigte Leitblech (24) an dem Auslass der Ansaugluftleitung (26) installiert ist und der Winkel zwischen dem geneigten Leitblech (24) und der ersten Platte (20) 30 Grad - 60 Grad beträgt.

## Revendications

1. Structure pour réduire la différence de température circonférentielle d'une bobine et d'un noyau de générateur/moteur, comprenant une base de rotor (1), un noyau de rotor (2) monté sur la base de rotor (1), une pluralité d'aciers magnétiques de rotor (3) agencés dans la direction axiale du noyau de rotor (2), dans lequel la structure comprend en outre une pluralité de segments de noyau de stator (4), une première plaque de pression de noyau (5), une seconde plaque de pression de noyau (6) et une vis de serrage (7), dans lequel la pluralité de segments de noyau de stator (4) sont empilés à partir de tôles d'acier au silicium (8) qui sont pourvues d'une fente (10) pour placer des bobines de stator (9), et un acier de canal de stator (11) est agencé entre n'importe quels deux segments adjacents des segments de noyau de stator (4), un canal de ventilation de stator (12) étant formé par les segments de noyau de stator adjacents (4) et l'acier de canal de stator (11), pour l'écoulement d'un fluide à des fins de refroidissement, dans lequel la pluralité de segments de noyau de stator (4) sont pénétrés par la vis de serrage (7) dont une extrémité est reliée de manière fixe à la première plaque de pression de noyau (5) et l'autre extrémité est reliée de manière fixe à la seconde plaque de pression de noyau (6) ; un espace (13) est prévu entre l'acier magnétique de rotor (3) et les segments de noyau de stator (4), une première plaque annulaire circonférentielle (14), dont une extrémité est reliée de manière fixe à la première plaque de pression de noyau (5) et le l'autre extrémité est reliée de manière fixe à la seconde plaque de pression de noyau (6), est reliée de manière fixe aux segments de noyau de stator (4), et au moins trois plaques axiales (15) sont reliées de manière fixe à la paroi interne de la première plaque annulaire circonférentielle (14) faisant face aux segments de noyau de stator (4), des chambres d'entrée d'air (16) et des chambres de sortie d'air (17) étant formées par la première plaque annulaire circonférentielle (14), les segments de noyau de stator (4) et les plaques axiales adjacentes (15), et les chambres d'entrée d'air (16) et les chambres de sortie d'air (17) sont agencées en alternance ; une pluralité de trous d'entrée d'air (18) et de trous de sortie d'air (19) sont configurés sur la première plaque annulaire circonférentielle (14), dans laquelle chaque trou d'entrée d'air (18) est en communication avec une chambre d'entrée d'air correspondante (16) et chaque trou de sortie d'air (19) est en communication avec une chambre de sortie d'air correspondante (17) ; une première plaque (20) et une seconde plaque (21) sont reliées de manière fixe à la paroi extérieure de la première plaque annulaire circonférentielle (14), et une seconde plaque annulaire circonférentielle (22) est reliée de manière fixe à la première plaque (20) et à la seconde plaque (21) ; un déflecteur incliné (24) est relié à la première plaque (20) via une pluralité de plaques de liaison (23) ; un conduit de sortie d'air (25) est relié à la seconde plaque annulaire circonférentielle (22) et communique avec les chambres de sortie d'air (17), tandis qu'un conduit d'air d'admission (26) est relié à la première plaque (20) et communique avec les chambres d'entrée d'air (16) ;
dans lequel une plaque de réglage de volume d'air (27) pour régler le débit d'air circonférentiel est installée au niveau de chacun des trous d'entrée d'air (18), dans lequel la plaque de réglage de volume d'air (27) est articulée sur la première plaque annulaire circonférentielle (14) ; chacun des trous d'entrée d'air (18) est bloqué en partie par la plaque de réglage de volume d'air (27), et la partie non bloquée de chaque trou d'entrée d'air (18) est une zone d'écoulement d'air (29) qui est minimisée lorsque le trou d'entrée d'air (18) est fermé depuis le côté du conduit d'air d'admission (26) lorsqu'il est vu dans la direction de l'axe du conduit d'air d'admission (26), et est maximisée lorsque le trou d'entrée d'air à symétrie circonférentielle (18) est ouvert vers le côté du conduit d'air d'admission (26) lorsqu'il est vu dans la direction de l'axe du conduit d'air d'admission (26) .

2. Structure selon la revendication 1, **caractérisée en ce que** la tôle d'acier au silicium (8) a une épaisseur de 0,5 mm ou 0,35 mm.

3. Structure selon la revendication 1, **caractérisée en ce que** la pluralité de trous d'entrée d'air (18) et de trous de sortie d'air (19) sont agencés en alternance sur la première plaque annulaire circonférentielle (14) à intervalle.

4. Structure selon la revendication 1, **caractérisée en ce qu'**une grande chambre (28) est formée par la base de rotor (1), la première plaque annulaire circonférentielle (14) et la première plaque (20), et communique avec le conduit d'air d'admission (26) et la chambre d'entrée d'air (16).

5. Structure selon la revendication 1, **caractérisée en ce que** le déflecteur incliné (24) est installé à la sortie du conduit d'air d'admission (26), et l'angle entre le déflecteur incliné (24) et la première plaque (20) est de 30 degrés - 60 degrés.
